# EUROPÄISCHE PATENTSCHRIFT

(11) **EP 2 226 518 B1**
(45) Veröffentlichungstag und Bekanntmachung des Hinweises auf die Patenterteilung: **19.03.2014**
(21) Anmeldenummer: 10151167.3
(22) Anmeldetag: 20.01.2010
(51) Int. Cl.: F16B 25/00, F16B 43/00

(54) **Befestigungs-Einrichtung**
Fastening device
Dispositif de fixation

(30) Priorität: 05.03.2009 DE 102009011364; 24.09.2009 DE 102009042909
(43) Veröffentlichungstag der Anmeldung: 08.09.2010
(73) Patentinhaber: TOGE-Dübel A. Gerhard KG, 90431 Nürnberg (DE)
(72) Erfinder: Gerhard, Anton, 90427, Nürnberg (DE); Gerhard, Andreas, 90427, Nürnberg (DE)
(74) Vertreter: Rau, Albrecht

(56) Entgegenhaltungen:
- EP-A1- 0 271 648
- EP-A1- 1 517 052

## Beschreibung

Die Erfindung betrifft eine Befestigungs-Einrichtung zum Befestigen von Dämm-Material.

Dämmstoff-Schrauben weisen üblicherweise einen mit Kunststoff umspritzten Kopf auf, wobei der Kunststoff eine vergrößerte Auflagefläche bildet, um das Dämm-Material an der Wand oder der Decke zu halten. Im Falle eines Brandes kann der Kunststoff jedoch relativ schnell schmelzen oder verbrennen, was dazu führt, dass das Dämm-Material nicht mehr sicher gehalten wird.

Außerdem ist die Herstellung einer Schraube mit umspritztem Kopf aufwändig und teuer.

Gattungsgemäße Schrauben sind beispielsweise aus der EP 0 271 648 A1 und aus der EP 1 517 052 A1 bekannt.

Der Erfindung liegt daher die Aufgabe zugrunde, eine Befestigungs-Einrichtung zum Befestigen von Dämm-Material mit verbesserten Eigenschaften zu schaffen, welche auf einfache Weise herstellbar ist.

Diese Aufgabe wird durch die Merkmale des Anspruchs 1 gelöst. Der Kern der Erfindung besteht darin, eine Dämmstoff-Schraube mit einer Halte-Scheibe aus einem feuerfesten Material zu versehen, wobei die Halte-Scheibe mit einer Abdeckung versehen ist.

Eine derartige Schraube ist auf besonders einfache Weise herstellbar. Da die Abdeckung unabhängig von der Halte-Scheibe herstellbar ist, kann sie flexibel, je nach Bedarf ausgewählt werden.

Vorzugsweise ist die Halte-Scheibe rund, insbesondere kreisförmig ausgebildet mit einem Radius, insbesondere von mindestens 0,5 cm, insbesondere mindestens 0,8 cm, insbesondere mindestens 1 cm. Die Halte-Scheibe ist vorzugsweise als runder Metall-Teller ausgebildet, womit auch flexibles Dämm-Material zuverlässig befestigbar ist.

Vorzugsweise ist die Abdeckung rund, insbesondere kreisförmig, ausgebildet mit einem Radius, welcher mindestens so groß ist, dass die Halte-Scheibe mittels der Abdeckung vollständig überdeckbar ist. Eine vollständige Überdeckung der Halte-Scheibe durch die Abdeckung führt zu einem besonders vorteilhaften ästhetischen Gesamteindruck. Dieser wird auch dadurch erreicht, dass die Abdeckung vorzugsweise aus Kunststoff ist, welcher in unterschiedlichsten Farben an das Dämm-Material angepasst erhältlich ist.

Eine Halte-Scheibe aus Metall weist selbst bei einer sehr geringen Dicke eine ausreichende Haltekraft auf. Außerdem übernimmt eine Halte-Scheibe aus Metall die tragende Wirkung, sodass die Abdeckung sehr dünn und/oder aus einem flexiblen Material sein kann.

Vorteilhafterweise ist die Abdeckung mit der Halte-Scheibe verbunden und kann daher nicht verlorengehen. Bei einer verklebten Verbindung der Halte-Scheibe und der Abdeckung ist die der Abdeckung zugewandte Seite der Halte-Scheibe vorteilhafterweise aufgeraut ausgebildet, um die Haftung der Abdeckung auf der Halte-Scheibe zu verbessern.

Vorzugsweise ist die Halte-Scheibe derart am Schrauben-Kopf angeordnet, dass sie in Einschraub-Richtung gegen die Schraube festgelegt ist. Dies führt zu einer einfacheren Montage, da die Halte-Scheibe nicht gegen die Schraube verrutschen kann.

Eine verdrehbare Anordnung der Halte-Scheibe auf dem Schrauben-Grundkörper hat den Vorteil, dass die Schraube vollständig eingeschraubt werden kann, ohne das Dämm-Material durch eine Rotation der Halte-Scheibe zu beschädigen.

Andererseits führt eine feste Verbindung der Halte-Scheibe mit dem Schrauben-Kopf zu einer besonders stabilen Ausführung der Dämmstoff-Schraube.

Vorzugsweise werden durch den durch die Halte-Scheibe zusammengedrückten Halte-Bereich der Abdeckung die Halte-Scheibe und die Abdeckung an der Schraube reibend festgelegt. Insbesondere liegt dabei ferner zwischen der Halte-Scheibe und der Abdeckung eine Reib- und/oder Rast-verbindung vor, so dass diese zusammengehalten werden. Insbesondere verjüngt sich der umlaufende Steg über seine Axialerstreckung, so dass die Halte-Scheibe einfach auf den Halte-Bereich aufschiebbar ist. Beim Aufschieben wird vorzugsweise der Halte-Bereich und/oder der Anlage-Bereich durch den umlaufenden Steg gleichmäßig zusammengedrückt und an die Schraube gedrückt.

Weitere Vorteile und Einzelheiten der Erfindung ergeben sich aus der Beschreibung mehrerer Ausführungsbeispiele anhand der Zeichnungen. Es zeigen:

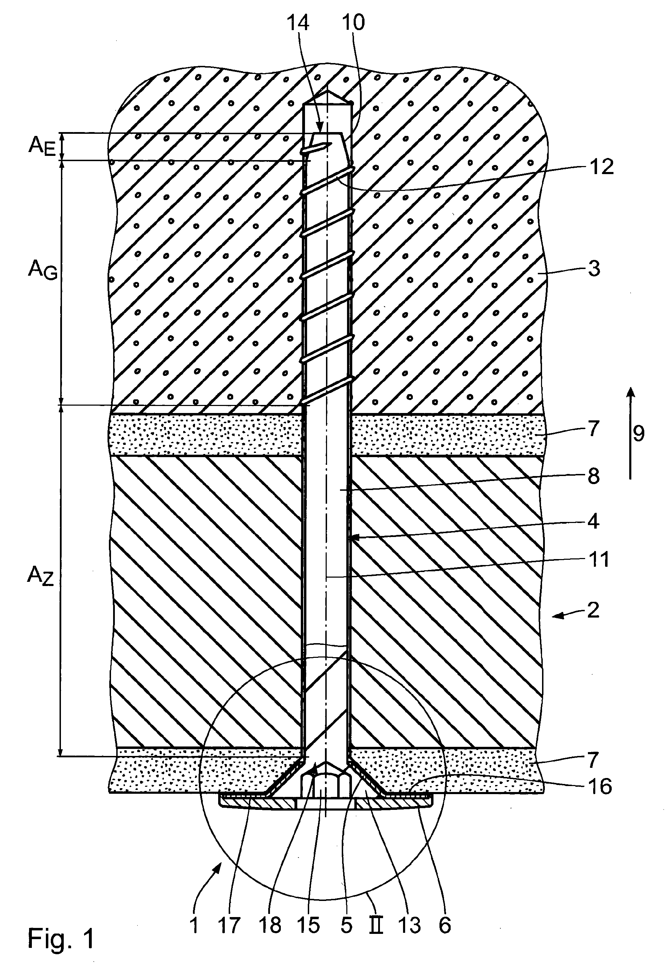

- Fig. 1: einen Querschnitt durch mittels einer Befestigungs-Einrichtung gemäß einem Beispiel der Erfindung an einer Decke befestigten Dämm-Material,
- Fig. 2: eine Ausschnittsvergrößerung des Bereichs II gemäß Fig. 1,
- Fig. 3: eine Darstellung gemäß Fig. 2 eines weiteren Beispiels der Erfindung und
- Fig. 4: eine Darstellung gemäß Fig. 2 eines Ausführungsbeispiels der Erfindung.

Die Befestigungs-Einrichtung 1 zum Befestigen von Dämm-Material 2 an einer Decke 3, insbesondere aus Beton, umfasst eine Schraube 4, eine Halte-Scheibe 5 und eine Abdeckung 6 zum Abdecken der Halte-Scheibe 5. Selbstverständlich kann das Dämm-Material 2 ebenso an einer Wand befestigt werden. Dies ist im Folgenden unter dem Begriff Decke stets mitinbegriffen.

Beim Dämm-Material 2 handelt es sich üblicherweise um ein weiches Material, beispielsweise Schaumstoff oder Polystyrol. Das Dämm-Material 2 kann einseitig oder beidseitig eine Deck-Lage 7 aus Folie, Kunststoff, Karton oder Gips-Karton aufweisen.

Der Aufbau der Schraube 4 entspricht im Wesentlichen dem aus der DE 10 2005 016 097 oder der DE 10 2006 037 006 bekannten, auf welche hiermit verwiesen wird. Die Schraube 4 ist zum Einschrauben in Beton bestimmt und hinsichtlich des Materials entsprechend dimensioniert. Als Material kann je nach den Erfordernissen normaler Stahl, kohlenstoffhaltiger Stahl oder Edelstahl verwendet werden. Die Schraube 4 weist einen im Wesentlichen zylinderförmigen Schrauben-Grundkörper 8 auf, der sich in einer Einschraub-Richtung 9 parallel zu einer Mittel-Längs-Achse 11 der Schraube 4 erstreckt. Der Schrauben-Grundkörper 8 weist einen sich an ein Einführ-Ende 14 anschließenden, leicht verjüngenden Einführ-Abschnitt A_{E} auf. Der Einführ-Abschnitt A_{E} erstreckt sich vom Einführ-Ende 14 des Schrauben-Grundkörpers 8 entgegen der Einschraub-Richtung 9. Die Erstreckung des Einführ-Abschnitts A_{E} in Richtung der Mittel-Längs-Achse 11 liegt im Bereich von 1 mm bis 1 cm, insbesondere im Bereich von 2 mm bis 5 mm. Der Schrauben-Grundkörper 8 hat einen Durchmesser D_{S} im Bereich von 3 mm bis 2 cm, insbesondere im Bereich von 4 mm bis 1 cm, insbesondere im Bereich von 5 mm bis 8 mm. Die Schraube 4 ist vorzugsweise in Bohrlöcher üblichen Durchmessers einschraubbar.

Einstückig mit dem Schrauben-Grundkörper 8 ist ein Außen-Gewinde 12 ausgebildet, das sich vom Einführ-Abschnitt A_{E} entgegen der Einschraub-Richtung 9 entlang eines Gewinde-Abschnitts A_{G} erstreckt. Das Außen-Gewinde 12 kann entsprechend der DE 10 2005 016 097 oder der DE 10 2006 037 006 einen Schneid-Abschnitt aufweisen, in welchem es Schneid-Elemente aufweist und somit selbstschneidend ausgebildet ist. Für Details bezüglich der Schneid-Elemente sei auf die Offenbarung der beiden genannten Druckschriften verwiesen. Im Übrigen ist das Außen-Gewinde 12 als Normalgewinde ausgebildet. An dem Gewinde-Abschnitt A_{G} schließt sich entgegen der Einschraub-Richtung 9 ein Zylinder-Abschnitt A_{Z} an, der eine im Wesentlichen glatte Oberfläche aufweist. Der Zylinder-Abschnitt A_{Z} hat eine Länge in Richtung der Mittel-Längs-Achse 11 im Bereich von 2 cm bis 30 cm, insbesondere im Bereich von 5 cm bis 20 cm, insbesondere im Bereich von 10 cm bis 15 cm. Vorzugsweise ist die Länge des Zylinder-Abschnitts A_{Z} auf die Dicke des Dämm-Materials 2 einschließlich der Deck-Lagen 7 abgestimmt. Somit kann je nach Dämm-Material 2 eine speziell hierfür passende Schraube 4 ausgewählt werden.

An den Zylinder-Abschnitt A_{Z} schließt sich ein Schrauben-Kopf 13 an. Der Schrauben-Kopf 13 ist insbesondere als Senk-Kopf ausgebildet. Er weist somit einen kegelabschnittförmigen äußeren Mantel auf. Im Schrauben-Kopf 13 ist außerdem eine Eingriffs-Aussparung 15 vorgesehen, in welche ein geeignetes Eingriffs-Mittel zum Einschrauben der Schraube 4 in Einschraub-Richtung 9 einsetzbar ist. Die Eingriffs-Aussparung 15 ist vorzugsweise als Torx oder Inbus, das heißt Sechskant, oder Robertson, das heißt Vierkant, ausgebildet. Eine schlitzförmige oder kreuzschlitzförmige oder entsprechende Ausbildung ist jedoch ebenso möglich. Torx-, Inbus- und Robertson-Schrauben-Köpfe ermöglichen ein besonders sicheres Zusammenwirken des zugehörigen Eingriffs-Mittels mit der Schraube 4.

Die mit dem Schrauben-Kopf 13 zusammenwirkende Halte-Scheibe 5 weist eine erste Seite 16, eine dieser gegenüber liegende zweite Seite 17 und eine Öffnung 18 zum Durchstecken des Schrauben-Grundkörpers 8 auf. Die Öffnung 18 hat einen Durchmesser D_{O}, welcher nur geringfügig größer ist als der Durchmesser D_{S} des Schrauben-Grundkörpers 8. Die Halte-Scheibe 5 ist somit im Wesentlichen spielfrei senkrecht zur Mittel-Längs-Achse 11 auf dem Schrauben-Grundkörper 8 angeordnet. Der Durchmesser D_{O} der Öffnung 18 ist insbesondere kleiner als der maximale Durchmesser des Schrauben-Kopfes 13.

Die erste Seite 16 der Halte-Scheibe 5 bildet eine Anlagefläche zum Halten des Dämm-Materials 2. Die Halte-Scheibe 5 ist aus einem feuerfesten Material, insbesondere aus Metall. Sie ist vorzugsweise rund, insbesondere kreisförmig ausgebildet mit einem Radius R_{S} von mindestens 0,5 cm, insbesondere mindestens 0,8 cm, insbesondere mindestens 1 cm. Die Halte-Scheibe 5 ist somit je nach Bedarf, insbesondere abgestimmt auf die Eigenschaften des Dämm-Materials 2, auswählbar. Die Halte-Scheibe 5 kann aber auch eine andere Form haben. Beispielsweise kann sie als Vieleck mit mindestens drei Ecken ausgestaltet sein. Wesentlich ist, dass die Halte-Scheibe 5 in der Lage ist, das Dämm-Material 2 sicher an der Decke 3 zu halten.

Die Halte-Scheibe 5 weist eine Vertiefung 19 zur Aufnahme des Schrauben-Kopfes 13 auf. Die Vertiefung 19 ist von der zweiten Seite 17 her gesehen konkav, insbesondere konisch ausgebildet. Die Vertiefung 19 ist durch einen sich entsprechend erstreckenden, umlaufenden Steg 25 begrenzt bzw. gebildet, der von der ersten Seite 16 vorspringt und im Querschnitt ringförmig ausgebildet ist. Von der ersten Seite 16 ausgehend läuft der Steg 25 gleichmäßig zusammen, so dass sich die Vertiefung 19 wie angegeben im Durchmesser in Richtung auf das Einführ-Ende 14 hin verjüngt. Die erste Seite 16 und die zweite Seite 17 liegen in zueinander parallelen Ebenen.

Der Schrauben-Kopf 13 ist vollständig in der Vertiefung 19 versenkbar, insbesondere derart, dass er in Einschraub-Richtung 9 bündig mit der zweiten Seite 17 der Halte-Scheibe 5 abschließt. Die zweite Seite 17 der Halte-Scheibe 5 und der Schrauben-Kopf 13 bilden somit eine glatte Oberfläche.

Die Vertiefung 19 weist eine Form auf, welche derart an den Schrauben-Kopf 13 angepasst ist, dass der Schrauben-Kopf 13 flächig an der Halte-Scheibe 5 anliegt. Die Vertiefung 19 und der Schrauben-Kopf 13 weisen insbesondere denselben Öffnungs-Winkel b bezüglich der Mittel-Längs-Achse 11 auf. Der Öffnungs-Winkel b beträgt mindestens 30°, insbesondere mindestens 45°, insbesondere mindestens 60°.

Die Abdeckung 6 ist zumindest bereichsweise an der zweiten Seite 17 der Halte-Scheibe 5 anliegend angeordnet. Sie ist vorzugsweise rund, insbesondere kreisförmig ausgebildet mit einem Radius R_{A}, welcher mindestens so groß ist, dass die Halte-Scheibe 5 mittels der Abdeckung 6 vollständig überdeckbar ist. Die Abdeckung 6 kann aber auch eine beliebige andere Form aufweisen. Beispielsweise kann sie wieder als Vieleck mit mindestens drei Ecken ausgestaltet sein. Wesentlich ist, dass die Abdeckung 6 die Halte-Scheibe 5 mindestens teilweise, vorzugsweise vollständig, überdecken kann. Die Abdeckung 6 überdeckt die zweite Seite 17 der Halte-Scheibe 5.

Die Abdeckung 6 ist aus Kunststoff. Sie kann auch zumindest teilweise aus Papier, Pappe oder einem tapetenähnlichen Material sein. Sie kann beispielsweise eine Lage festen Papiers mit einer Beschichtung aufweisen. Die Abdeckung 6 weist auf ihrer der Halte-Scheibe 5 abgewandten Seite eine Oberflächen-Struktur auf, welche derjenigen der Deck-Lage 7 des Dämm-Materials 2 nachempfunden ist. Die Abdeckung 6 ist auf einfache Weise überstreichbar oder mit Tapete überklebbar.

Die Abdeckung 6 ist mit der Halte-Scheibe 5 verbunden, insbesondere mit dieser verklebt. Um die Haftung der Abdeckung 6 auf der Halte-Scheibe 5 zu verbessern, kann die zweite Seite 17 der Halte-Scheibe 5 aufgeraut ausgebildet sein.

Es ist ebenso möglich, die Abdeckung 6 auf die Halte-Scheibe 5 aufsteckbar auszubilden. Die Abdeckung 6 weist in Richtung der Mittel-Längs-Achse 11 eine Dicke H_{A} auf. Die Halte-Scheibe 5 weist in Richtung der Mittel-Längs-Achse 11 eine Dicke H_{S} auf. Hierbei ist die Dicke H_{A} der Abdeckung 6 relativ frei wählbar, da die Halte-Scheibe 5 die eigentliche Halte-Wirkung zum Halten des Dämm-Materials 2 ausübt. Die Abdeckung 6 kann flach oder konvex ausgebildet sein. Die Abdeckung 6 ist scheiben- oder tellerförmig ausgebildet. Gemäß dem Beispiel weist die Abdeckung 6 in radialer Richtung bezüglich der Mittel-Längs-Achse 11 einen Rand-Steg 20 auf, welcher die Halte-Scheibe 5 in radialer Richtung umgibt. Die Halte-Scheibe 5 ist somit von der Abdeckung 6 vollständig abgedeckt. Die Gesamt-Dicke H_{S} + H_{A} der Halte-Scheibe 5 mit der Abdeckung 6 ist vorzugsweise möglichst gering. Sie beträgt höchstens 5 mm, insbesondere höchstens 3 mm, vorzugsweise höchstens 2 mm. Aufgrund der Stabilität der Halte-Scheibe 5 aus Metall kann die Gesamtdicke H_{S} + H_{A} im Vergleich zu herkömmlichen Dämmstoff-Schrauben mit einem kunststoffumspritzten Kopf deutlich reduziert werden. Dies führt zu einer besonders vorteilhaften Anbringung des Dämm-Materials 2 an der Decke 3.

Die Abdeckung 6 weist eine Abdeck-Öffnung 21 auf, durch welche der Schrauben-Kopf 13 für Eingriffs-Mittel zugänglich ist. Die Abdeck-Öffnung 21 kann mittels eines deckel- oder einsatzartigen Elements verschlossen werden. Die Abdeck-Öffnung 21 weist einen Durchmesser D_{A} auf. Der Durchmesser D_{A} der Abdeck-Öffnung 21 ist vorzugsweise kleiner als der maximale Durchmesser des Schrauben-Kopfes 13. Der Schrauben-Kopf 13 ist somit im Wesentlichen spielfrei in Einschraub-Richtung 9 zwischen der Halte-Scheibe 5 und der Abdeckung 6 gehalten.

Prinzipiell ist es möglich, die Abdeckung 6 zumindest im Bereich um die Abdeck-Öffnung 21 herum aus einem elastischen Material auszubilden, sodass der Schrauben-Kopf 13 trotz seiner größeren Abmessung durch die Abdeck-Öffnung 21 hindurchgesteckt werden kann, jedoch anschließend von der Abdeckung 6 in der Vertiefung 19 der Halte-Scheibe 5 gehalten wird. In einer bevorzugten Ausführungsform ist die Halte-Scheibe 5 in Einschraub-Richtung 9 gegen die Schraube 4 festgelegt. Hierzu kann die Halte-Scheibe 5 im Bereich der Vertiefung 19 mit dem Schrauben-Kopf 13 verbunden, insbesondere verklebt, verlötet oder verschweißt sein.

Gemäß dem ersten Beispiel ist der Schrauben-Kopf 13 fest mit der Halte-Scheibe 5 verbunden. Alternativ hierzu ist es ebenso möglich, die Halte-Scheibe 5 verdrehbar auf dem Schrauben-Grundkörper 8 anzuordnen.

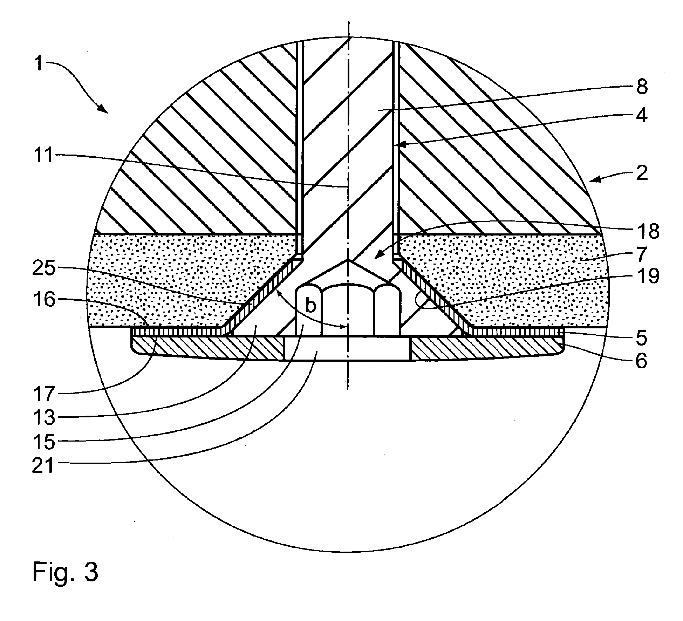

Gemäß einem weiteren, in Fig. 3 dargestellten Ausführungsbeispiel steht die Abdeckung 6 in radialer Richtung nicht über die Halte-Scheibe 5 über, sondern schließt bündig mit dieser ab. Dies ermöglicht eine besonders einfache Herstellung der Abdeckung 6. Diese Ausführungsform ist insbesondere bei einer Dicke der Abdeckung 6 und/oder der Halte-Scheibe 5 von weniger als 1 mm vorteilhaft. In einer bevorzugten Ausführungsform ist die Abdeckung 6 auf ihrer der Halte-Scheibe 5 zugewandten Seite mit einer selbstklebenden Beschichtung versehen.

Zur Montage des Dämm-Materials 2 wird eine Bohrung geeigneten Durchmessers und geeigneter Tiefe durch das Dämm-Material 2 und in die Decke 3 eingebracht. Sodann wird das Dämm-Material 2 mittels der Befestigungs-Einrichtung 1 an der Decke 3 befestigt, indem die Schraube 4 in die Bohrung eingeführt und mittels des Außen-Gewindes 12 in der Decke 3 verschraubt wird. Hierbei kommt die Halte-Scheibe 5 an der Deck-Lage 7 des Dämm-Materials 2 zum Anliegen. Die Abdeckung 6 trägt einerseits zum sicheren Halt der Schraube 4 an der Halte-Scheibe 5 bei. Außerdem führt sie aufgrund ihrer speziellen Ausgestaltung, welche der Oberfläche der Decklage 7 des Dämm-Materials 2 nachempfunden ist, zu einem besonders ästhetischen Erscheinungsbild. Je nach Erfordernissen kann die Befestigungs-Einrichtung 1 überstrichen, überklebt oder verputzt werden.

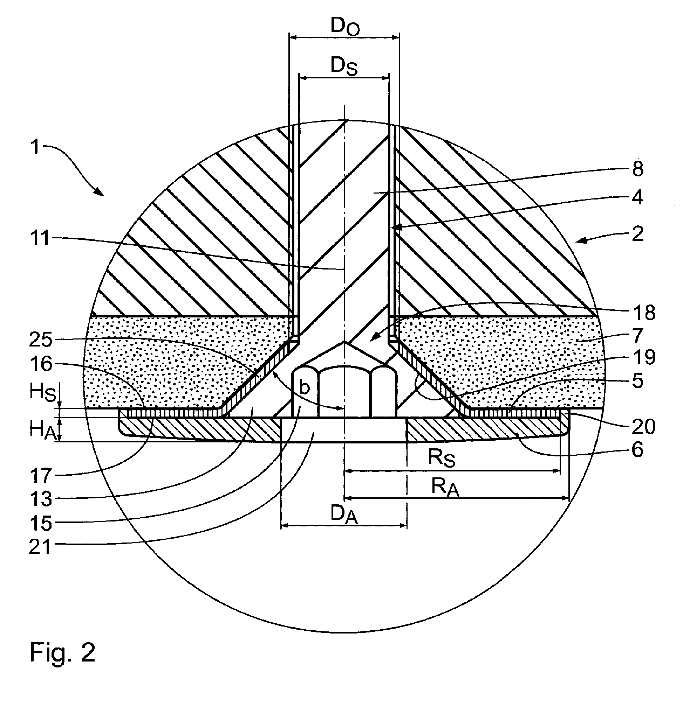

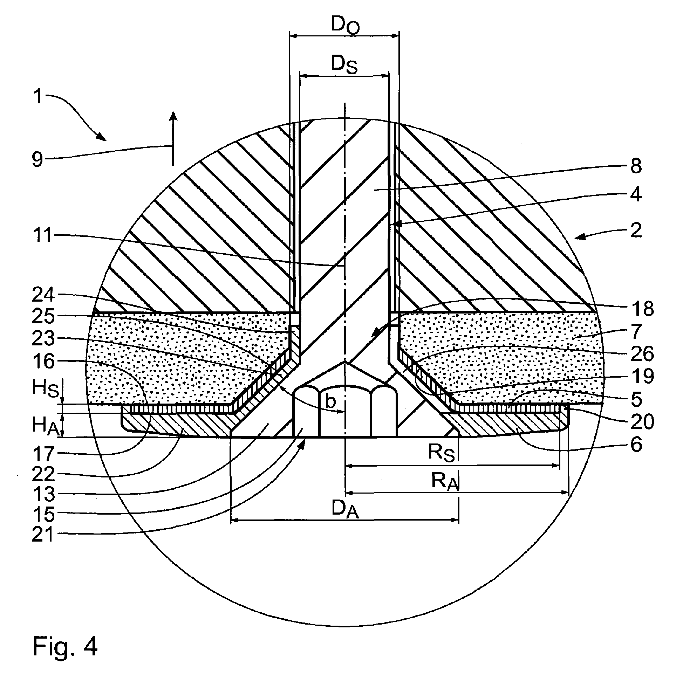

Im Folgenden wird unter Bezugnahme auf die Fig. 4 ein Ausführungsbeispiel der Erfindung beschrieben. Identische Teile erhalten dieselben Bezugszeichen wie beim Ausführungsbeispiel gemäß Fig. 2, auf dessen Beschreibung hiermit verwiesen wird. Gemäß diesem Ausführungsbeispiel ist es vorgesehen, die Abdeckung 6 mit einem Abdeck-Bereich 22, einem Anlage-Bereich 23 und einem Halte-Bereich 24 auszubilden. Die Abdeckung ist einstückig ausgebildet. Der Abdeck-Bereich 22 ist im Wesentlichen gemäß einem der vorher beschriebenen Ausführungsbeispiele ausgebildet. Er kann insbesondere mit oder ohne Rand-Steg 20 ausgebildet sein und dient zum Abdecken der Halte-Scheibe 5. An den im Wesentlichen ebenen Abdeck-Bereich 22 schließt sich radial nach innen in Richtung zur Mittel-Längs-Achse 11 der Anlage-Bereich 23 an. Der Anlage-Bereich 23 ist in seiner Form an die Vertiefung 19 bzw. den umlaufenden Steg 25 und an den Schrauben-Kopf 13 angepasst. Er ist insbesondere in Einschraub-Richtung 9 gesehen konkav, vorzugsweise konisch ausgebildet. Der Anlage-Bereich 23 ist im Wesentlichen als hohler Vorsprung ausgebildet, der im Querschnitt in etwa kreisringförmig ist und von dem Abdeck-Bereich 22 vorspringt. Dabei verjüngt sich der Anlage-Bereich 23 von dem Abdeck-Bereich 22 ausgehend in Richtung Einführ-Ende 14 gleichmäßig. Im eingeschraubten Zustand der Schraube 4 liegt der Anlage-Bereich 23 flächig am Schrauben-Kopf 13 an, der über die Abdeck-Öffnung 21 von außen zugänglich ist. Er liegt außerdem vorzugsweise flächig an der Vertiefung 19 bzw. an dem umlaufenden Steg 25 der Halte-Scheibe 5 an. Bei diesem Ausführungsbeispiel ist die Abdeckung 6 somit bereichsweise zwischen der Halte-Scheibe 5 und dem Schrauben-Kopf 13 angeordnet. Sie ist insbesondere zwischen der Halte-Scheibe 5 und dem Schrauben-Kopf 13 fixiert. Genauer betrachtet befindet sich der Anlage-Bereich 23 zwischen dem benachbarten, äußeren umlaufenden Steg 25 und dem inneren Schrauben-Kopf 13. Im eingeschraubten Zustand der Schraube 4 schließt der Schrauben-Kopf 13 bündig mit dem Abdeck-Bereich 22 der Abdeckung 6 ab.

An den Anlage-Bereich 23 schließt sich in radialer Richtung nach innen der Halte-Bereich 24 an. Der Halte-Bereich 24 schließt sich somit an das dem Abdeck-Bereich 22 abgewandte Ende des Anlage-Bereichs 23 an. Der Halte-Bereich 24 ist im Wesentlichen hohlzylindrisch ausgebildet und hat einen im Wesentlichen konstanten Innen-Durchmesser. Er ist in seiner Innen-Abmessung an den Schrauben-Grundkörper 8 angepasst. Vorzugsweise steht der Halte-Bereich 24 in Einschraub-Richtung 9 über die Halte-Scheibe 5 bzw. über den umlaufenden Steg 25 über. In dem freien RandAbschnitt des Halte-Bereichs 24 ist mindestens eine nach radial außen vorspringende Rast-Nase bzw. ein entsprechender Rast-Steg (nicht in Figur 4 dargestellt) vorgesehen. Die Halte-Scheibe 5 ist durch die Abdeckung 6 von der Schraube 4, insbesondere vom Schrauben-Kopf 13, separiert. Hierdurch lassen sich insbesondere elektrochemische Reaktionen, welche aufgrund einer unterschiedlichen Materialwahl für die Halte-Scheibe 5 und die Schraube 4 möglich sind, zuverlässig vermeiden.

Bei diesem Ausführungsbeispiel ist die Abdeckung 6 einteilig ausgebildet.

In dem Anlage-Bereich 23 und dem Halte-Bereich 24 erstreckt sich mindestens eine Längs-Ausnehmung 26, die den Anlage-Bereich 23 und den Halte-Bereich 24 in entsprechende Teil-Abschnitte unterteilt. Die Teil-Abschnitte stehen mit dem Abdeck-Bereich 22 in direkter Verbindung. Durch die mindestens eine Längs-Ausnehmung 26 sind die Teil-Abschnitte zueinander verschwenkbar, so dass der Anlage-Bereich 23 und der Halte-Bereich 24 eine gewisse Flexibilität haben. Insbesondere ist die mindestens eine Längs-Ausnehmung 26 als durchgängiger Schlitz ausgebildet, der den Anlage-Bereich 23 und den Halte-Bereich 24 vollständig durchsetzt. Vorzugsweise sind mindestens drei Längs-Ausnehmungen 26 vorgesehen, die identische angulare Abstände zueinander aufweisen. Am bevorzugtesten sind vier Längs-Ausnehmungen 26 vorhanden.

Nachfolgend wird die Montage des Ausführungsbeispiels gemäß Figur 4 beschrieben. Der Innen-Durchmesser des Halte-Bereichs 24 ist ursprünglich geringfügig kleiner als der Durchmesser der Schraube 4 in ihrem Gewinde-Abschnitt A_{G}. Die Abdeckung 6 ist daher mit einem gewissen Kraftaufwand über den Gewinde-Abschnitt A_{G} zu dem Schrauben-Kopf 13 zu schieben, wobei der Halte-Bereich 24 entsprechend aufgeweitet wird. Der ursprüngliche Innen-Durchmesser des Halte-Bereichs 24 entspricht im Wesentlichen dem Außen-Durchmesser D_{S} des Zylinder-Abschnitts A_{Z} der Schraube 4. Die Abdeckung 6 ist daher im Wesentlichen mit Spiel bzw. leichtgängig entlang des Zylinder-Abschnitts A_{Z} verschiebbar. Der Aufschiebe-Weg der Abdeckung 6 ist durch den Schrauben-Kopf 13 beschränkt; in der in Figur 4 dargestellten End-Position der Abdeckung 6 liegt der Anlage-Bereich 23 außen an dem Schrauben-Kopf 13 an.

Anschließend ist die Halte-Scheibe 5 auf die Schraube 4 aufzuschieben. Die Öffnung 18 ist dabei derart dimensioniert, dass die Halte-Scheibe 5 ohne Anlage über den Gewinde-Abschnitt A_{G} in Richtung auf den Schrauben-Kopf 13 bewegt werden kann. Der minimale Innen-Durchmesser D_{O} des umlaufenden Stegs 25 bzw. der Öffnung 18 ist somit größer als der Außen-Durchmesser der Schraube 4 in deren Gewinde-Abschnitt A_{G}. Er ist vorzugsweise kleiner als der ursprüngliche Außen-Durchmesser des Halte-Bereichs 24. Die Halte-Scheibe 5 ist dann auf den Halte-Bereich 24 aufzuschieben. Die Halte-Scheibe 5 ist bis zu dem Anlage-Bereich 23 aufzuschieben. Gemäß der in Fig. 4 dargestellten End-Position liegt die Seite 17 an dem Abdeck-Bereich 22 an. Der Anlage-Bereich 23 ragt dabei in die Vertiefung 19. Der Halte-Bereich 24 steht gegenüber dem umlaufenden Steg 25 unten vor. Der umlaufende Steg 25 drückt dabei den Anlage-Bereich 23 und/oder den Halte-Bereich 24 zusammen, so dass der Anlage-Bereich 23 und/oder der Halte-Bereich 24 reibend außen an der Schraube 4 bzw. an dem Schrauben-Grundkörper 8 anliegt. Die mindestens eine Rast-Nase bzw. der mindestens eine Rast-Steg untergreift den freien Rand des Halte-Bereichs 24, so dass die Halte-Scheibe 5 und die Abdeckung 6 miteinander in Rast-Verbindung stehen. Durch die Reib-Verbindung zwischen der Abdeckung 6 und der Schraube 4 wird eine Fixierung der Abdeckung 6 und der Halte-Scheibe 5 auf der Schraube 4 erzielt. Die Halte-Scheibe 5 und die Abdeckung 6 sind dadurch axial auf der Schraube 4 fixiert. Ferner wird dadurch auch eine Verdrehung derselben gegenüber der Schraube 4 unterbunden. Diese Reib-Verbindung wird vorzugsweise dadurch erzielt, dass der minimale Innen-Durchmesser des umlaufenden Stegs 25 kleiner als der ursprüngliche Außen-Durchmesser des Halte-Bereichs 24 ist, so dass der umlaufende Steg 25 den Halte-Bereich 24 zusammendrückt und außen an die Schraube 4 presst. Der umlaufende Steg 25 kann sich aber auch stärker als der Anlage-Bereich 23 verjüngen, um die Reib-Verbindung zu erzielen. Aufgrund des sich verjüngenden Verlaufs des umlaufenden Stegs 25 wird das Aufschieben der Halte-Scheibe 5 auf den Anlage-Bereich 23 und den Halte-Bereich 24 vereinfacht. In der in Figur 4 dargestellten End-Position liegt der Abdeck-Bereich 22 an der zweiten Seite 17 der Halte-Scheibe 5 an.

Vorteilhaft an diesem Ausführungsbeispiel ist es, dass die Abdeckung 6 durch die Klemmung zwischen der Halte-Scheibe 5 und dem Schrauben-Kopf 13 sicher fixiert ist. Hierdurch wird ein unbeabsichtigtes Lösen der Abdeckung 6 zuverlässig verhindert. Außerdem wird die Anbringung der Abdeckung 6 hierdurch erleichtert.

## Patentansprüche

1. Befestigungs-Einrichtung (1) zum Befestigen von Dämm-Material umfassend
a. eine Schraube (4) mit
i. einem sich in einer Einschraub-Richtung (9) erstreckenden Schrauben-Grundkörper (8),
ii. mindestens einem auf dem Schrauben-Grundkörper (8) angeordneten Gewinde (12) und
iii. einem an einem Einführ-Ende (14) des Schrauben-Grundkörpers (8) gegenüberliegenden Ende angeordneten Schrauben-Kopf (13),
b. eine mit dem Schrauben-Kopf (13) zusammenwirkende Halte-Scheibe (5) mit
i. einer ersten Seite (16), welche eine Anlagefläche zum Halten des Damm-Materials bildet,
ii. einer dieser gegenüberliegenden zweiten Seite (17),
iii. einer Öffnung (18) zum Durchstecken des Schrauben-Grundkörpers (8) und
c. eine Abdeckung (6), welche zumindest bereichsweise an der zweiten Seite (17) der Halte-Scheibe (5) anliegend angeordnet ist, zum Abdecken der Halte-Scheibe (5),
d. wobei die Halte-Scheibe (5) aus einem feuerfesten Material ist,
**dadurch gekennzeichnet, dass**
die Abdeckung (6) klemmend zwischen der Halte-Scheibe (5) und dem Schrauben-Kopf (13) fixierbar ist.

2. Befestigungs-Einrichtung (1) gemäß Anspruch 1, **dadurch gekennzeichnet, dass** die Abdeckung (6) zumindest teilweise aus Kunststoff, Pappe oder Papier ist.

3. Befestigungs-Einrichtung (1) gemäß einem der vorhergehenden Ansprüche, **dadurch gekennzeichnet, dass** die Halte-Scheibe (5) und die Abdeckung (6) miteinander verbunden, insbesondere miteinander verklebt sind.

4. Befestigungs-Einrichtung (1) gemäß einem der vorhergehenden Ansprüche, **dadurch gekennzeichnet, dass** die Halte-Scheibe (5) eine Vertiefung (19) zur Aufnahme des Schrauben-Kopfes (13) aufweist, wobei die Vertiefung (19) von der zweiten Seite (17) gesehen konkav, insbesondere konisch ausgebildet ist.

5. Befestigungs-Einrichtung (1) gemäß Anspruch 4, **dadurch gekennzeichnet, dass** der Schrauben-Kopf (13) vollständig in der Vertiefung (19) versenkbar ist, insbesondere derart, dass er in Einschraub-Richtung (9) bündig mit der zweiten Seite (17) der Halte-Scheibe (5) abschließt.

6. Befestigungs-Einrichtung (1) gemäß Anspruch 4 oder 5, **dadurch gekennzeichnet, dass** die Vertiefung (19) eine Form aufweist, welche derart an den Schrauben-Kopf (13) angepasst ist, dass der Schrauben-Kopf (13) flächig an der Halte-Scheibe (5) anliegt.

7. Befestigungs-Einrichtung (1) gemäß einem der vorhergehenden Ansprüche, **dadurch gekennzeichnet, dass** die Abdeckung (6) eine Abdeck-Öffnung (21) aufweist, durch welche der Schrauben-Kopf (13) für ein Eingriffs-Mittel zugänglich ist.

8. Befestigungs-Einrichtung (1) gemäß einem der vorhergehenden Ansprüche, **dadurch gekennzeichnet, dass** die Halte-Scheibe (5) in Einschraub-Richtung (9) gegen die Schraube (4) festgelegt ist.

9. Befestigungs-Einrichtung (1) gemäß einem der vorhergehenden Ansprüche, **dadurch gekennzeichnet, dass** der Schrauben-Grundkörper (8) gegen die Halte-Scheibe (5) verdrehbar ist.

10. Befestigungs-Einrichtung (1) gemäß einem der Ansprüche 1 bis 8, **dadurch gekennzeichnet, dass** der Schrauben-Kopf (13) fest mit der Halte-Scheibe (5) verbunden ist.

11. Befestigungs-Einrichtung (1) gemäß einem der vorhergehenden Ansprüche, **dadurch gekennzeichnet, dass** die Abdeckung (6) einen vorspringenden, die Schraube (4) bereichsweise umlaufenden Bereich (23, 24) aufweist, der vorzugsweise im Querschnitt im Wesentlichen ringförmig ausgebildet ist und zusammendrückbar ist.

12. Befestigungs-Einrichtung (1) gemäß Anspruch 11, **dadurch gekennzeichnet, dass** die Halte-Scheibe (5) einen umlaufenden Steg (25) zum Drücken des Bereichs (23, 24) an die Schraube (4) aufweist, wobei sich vorzugsweise der umlaufende Steg (25) über seine Axialerstreckung verjüngt.

13. Befestigungs-Einrichtung (1) gemäß Anspruch 11 oder 12, **dadurch gekennzeichnet, dass** in dem Bereich (23, 24) mindestens eine Längs-Ausnehmung (26), insbesondere in Form eines Schlitzes, vorgesehen ist.

14. Befestigungs-Einrichtung (1) gemäß einem der vorhergehenden Ansprüche, **dadurch gekennzeichnet, dass** die Abdeckung (6) im eingeschraubten Zustand der Schraube (4) mit einem Anlage-Bereich (23) flächig am Schrauben-Kopf (13) anliegt.

15. Befestigungs-Einrichtung (1) gemäß einem der vorhergehenden Ansprüche, **dadurch gekennzeichnet, dass** im eingeschraubten Zustand der Schraube (4) der Schrauben-Kopf (13) bündig mit einem Abdeck-Bereich (22) der Abdeckung (6) abschließt.

## Claims

1. Fastening device (1) for securing insulating material comprising
a. a screw (4) with
i. a screw base body (8) extending in a screwing-in direction (9),
ii. at least one thread (12) formed on the screw base body (8) and
iii. a screw head (13) arranged at the end opposite the insertion end (14) of the screw base body (8),
b. a retaining disc (5) cooperating with the screw head (13) comprising
i. a first side (16) which forms a bearing surface for holding the insulating material,
ii. a second side (17) opposite the latter,
iii. an opening (18) for inserting the screw base body (8) and
c. a cover (6) which is arranged bearing at least in some parts on the second side (17) of the retaining disc (5) for covering the retaining disc (5),
d. the retaining disc (5) being made from a fireproof material,
**characterised in that**
the cover (6) can be fixed clamped between the retaining disc (5) and the screw head (13).

2. Fastening device (1) according to claim 1, **characterised in that** the cover (6) is made at least partly of plastic, cardboard or paper.

3. Fastening device (1) according to one of the preceding claims, **characterised in that** the retaining disc (5) and the cover (6) are joined together, in particular are adhered to one another.

4. Fastening device (1) according to one of the preceding claims, **characterised in that** the retaining disc (5) comprises a depression (19) for mounting the screw head (13), the depression (19) being formed to be concave as seen from the second side (17), in particular conical.

5. Fastening device (1) according to claim 4, **characterised in that** the screw head (13) can be sunk fully into the depression (19), in particular such that in screwing-in direction (9) it closes flush with the second side (17) of the retaining disc (5).

6. Fastening device (1) according to claim 4 or 5, **characterised in that** the depression (19) has a form which is adjusted to the screw head (13) such that the screw head (13) bears flat on the retaining disc (5).

7. Fastening device (1) according to one of the preceding claims, **characterised in that** the cover (6) comprises a cover opening (21), through which the screw head (13) is accessible for an operating device.

8. Fastening device (1) according to one of the preceding claims, **characterised in that** the retaining disc (5) is secured in screwing-in direction (9) against the screw (4).

9. Fastening device (1) according to one of the preceding claims, **characterised in that** the screw base body (8) can be rotated against the retaining disc (5).

10. Fastening device (1) according to one of claims 1 to 8, **characterised in that** the screw head (13) is connected securely to the retaining disc (5).

11. Fastening device (1) according to one of the preceding claims, **characterised in that** the cover (6) comprises a projecting section (23, 24) surrounding the screw (4) in part, which section is preferably configured to be substantially annular in cross section and is compressible.

12. Fastening device (1) according to claim 11, **characterised in that** the retaining disc (5) comprises a peripheral web (25) for pushing the section (23, 24) onto the screw (4), wherein preferably the peripheral web (25) tapers over its axial extension.

13. Fastening device (1) according to claim 11 or 12, **characterised in that** in the section (23, 24) at least one longitudinal recess (26), is provided, in particular in the form of a slot.

14. Fastening device (1) according to one of the preceding claims, **characterised in that** the cover (6) in the screwed-in position of the screw (4) bears flat with a bearing section (23) on the screw head (13).

15. Fastening device (1) according to one of the preceding claims, **characterised in that** in the screwed-in state of the screw (4) the screw head (13) closes flush with a cover section (22) of the cover (6).

## Revendications

1. Dispositif de fixation (1) destiné à la fixation d'un matériau d'isolation comprenant
a. une vis (4) comportant
i. un corps de base (8) de vis s'étendant dans une direction de vissage (9),
ii. au moins un filetage (12) formé sur le corps de base (8) de vis et
iii. une tête (13) de vis formée sur une extrémité opposée à l'extrémité d'insertion (14) du corps de base (8) de vis,
b. un disque de maintien (5), agissant conjointement avec la tête (13) de vis, comportant
i. une première face (16) qui forme une surface d'appui pour le maintien du matériau d'isolation,
ii. une deuxième face (17) qui est en face de celle-ci,
iii. un orifice (18) pour le passage du corps de base (8) de vis, et
c. un revêtement (6) qui est disposé adjacent au moins par endroits sur la deuxième face (17) du disque de maintien (5), pour le recouvrement du disque de maintien (5),
d. le disque de maintien (5) étant constitué d'un matériau résistant au feu,
**caractérisé en ce que**
le revêtement (6) peut être fixé en étant serré entre le disque de maintien (5) et la tête (13) de vis.

2. Dispositif de fixation (1) selon la revendication 1, **caractérisé en ce que** le revêtement (6) est au moins partiellement en matière synthétique, en carton ou en papier.

3. Dispositif de fixation (1) selon l'une des revendications précédentes, **caractérisé en ce que** le disque de maintien (5) et le revêtement (6) sont reliés ensemble, en particulier, sont collés ensemble.

4. Dispositif de fixation (1) selon l'une des revendications précédentes, **caractérisé en ce que** le disque de maintien (5) présente un renfoncement (19) pour l'admission de la tête (13) de vis, le renfoncement (19) étant de forme concave, en particulier conique, vu de la deuxième face (17).

5. Dispositif de fixation (1) selon la revendication 4, **caractérisé en ce que** la tête (13) de vis peut être totalement enfouie dans le renfoncement (19), en particulier, de telle manière qu'elle ferme de manière étanche avec la deuxième face (17) du disque de maintien (5) dans la direction de vissage (9).

6. Dispositif de fixation (1) selon les revendications 4 ou 5, **caractérisé en ce que** le renfoncement (19) présente une forme qui est ajustée de telle manière sur la tête (13) de vis que la tête (13) de vis est appliquée à plat sur le disque de maintien (5).

7. Dispositif de fixation (1) selon l'une des revendications précédentes, **caractérisé en ce que** le revêtement (6) présente un orifice (21) dans le revêtement par lequel la tête (13) de vis est accessible pour un moyen d'engagement.

8. Dispositif de fixation (1) selon l'une des revendications précédentes, **caractérisé en ce que** le disque de maintien (5) est plaqué contre la vis (4) dans la direction de vissage (9).

9. Dispositif de fixation (1) selon l'une des revendications précédentes, **caractérisé en ce que** le corps de base (8) de vis peut être tourné contre le disque de maintien (5).

10. Dispositif de fixation (1) selon l'une des revendications 1 à 8, **caractérisé en ce que** la tête (13) de vis est reliée solidement avec le disque de maintien (5).

11. Dispositif de fixation (1) selon l'une des revendications précédentes, **caractérisé en ce que** le revêtement (6) présente une partie en avancée (23, 24) faisant partiellement le tour de la vis (4), qui, de préférence, est conçue substantiellement de forme circulaire dans sa section et peut être comprimée.

12. Dispositif de fixation (1) selon la revendication 11, **caractérisé en ce que** le disque de maintien (5) présente un appontement (25), en faisant le tour, pour la compression de la partie (23, 24) sur la vis (4), l'appontement (25) faisant le tour s'amenuisant de préférence sur son extension axiale.

13. Dispositif de fixation (1) selon les revendications 11 ou 12, **caractérisé en ce qu'**un renfoncement longitudinal (26), en particulier sous la forme d'une fente, est prévu dans la partie (23, 24).

14. Dispositif de fixation (1) selon l'une des revendications précédentes, **caractérisé en ce que** le revêtement (6) est appliqué à plat sur la tête (13) de vis avec une partie d'appui (23) à l'état vissé de la vis (4).

15. Dispositif de fixation (1) selon l'une des revendications précédentes, **caractérisé en ce que** la tête (13) de vis ferme de manière étanche avec une partie de recouvrement (22) le revêtement (6) à l'état vissé de la vis (4).
